# EUROPEAN PATENT APPLICATION

(11) **EP 1 942 572 A1**
(43) Date of publication of application: **09.07.2008**
(21) Application number: 06797142.4
(22) Date of filing: 31.08.2006
(51) Int. Cl.: H02K 21/14, H02K 19/10

(54) **ROTARY ELECTRIC MACHINE**

(30) Priority: 31.08.2005 JP 2005251848; 10.02.2006 JP 2006033948
(71) Applicant: Kabushiki Kaisha Toshiba, Minato-ku, Tokyo 105-8001 (JP); Toshiba Industrial Products Manufacturing Corporation, Mie-gun, Mie-ken (JP)
(72) Inventor: SAKAI, Kazuto c/o Intellectual Property Division, Minato-ku Tokyo (JP); TAKAHASHI, Norio c/o Intellectual Property Division, Minato-ku Tokyo (JP); ARATA, Masanori c/o Intellectual Property Division, Minato-ku Tokyo (JP); MOCHIZUKI, Motoyasu c/o Intellectual Property Division, Minato-ku Tokyo (JP); MATSUBARA, Masakatsu c/o TOSHIBA INDUSTRIAL PRODUCTS, Asahi-cho Mie-gun Mie (JP); HIRANO, Yasuo c/o TOSHIBA INDUSTRIAL PRODUCTS, Asahi-cho Mie-gun Mie (JP); HANAI, Takashi c/o TOSHIBA INDUSTRIAL PRODUCTS, Asahi-cho Mie-gun Mie (JP)
(74) Representative: HOFFMANN EITLE
(86) International application number: PCT/JP2006/317182
(87) International publication number: WO 2007/026802

(57) **Abstract**

An object of the present invention is to provide an internal permanent magnet type rotating electrical machine capable of maintaining compactness and high output and reducing vibration and noise caused by electromagnetic force. The rotating electrical machine of the present invention has an annular stator and a rotor that is arranged inside the stator with an air gap interposed between the stator and the rotor. The stator has a stator iron core provided with a plurality of slots at circumferential intervals and a coil received in each of the slots. The rotor has a rotor iron core, a plurality of permanent magnets embedded in a plurality of magnetic pole forming positions that are set along an outer circumference of the rotor iron core, an iron core section that faces the air gap and is magnetized by the permanent magnets to form a magnetic pole on an air gap fronting face at each of the magnetic pole forming positions, and an axially extending recess formed at a circumferentially central part of the air gap fronting face of each of the iron core sections.

## Description

### TECHNICAL FIELD

The present invention relates to an internal permanent magnet type rotating electrical machine used for a driving motor or generator of a hybrid vehicle (HEV), an electric vehicle (EV), an electric train, or the like.

### BACKGROUND TECHNOLOGY

A driving motor or generator of a hybrid vehicle (HEV), an electric vehicle (EV), an electric train, or the like mainly employs a rotating electrical machine using permanent magnets. Generally, permanent magnet motors are largely classified into two types. Namely, one is a surface permanent magnet motor that attaches permanent magnets to an outer circumference of a rotor iron core and the other is an internal permanent magnet motor that embeds permanent magnets inside a rotor iron core. The internal permanent magnet motor is suitable for a variable speed driving motor.

Known internal permanent magnet motors are described in "Design and Control of Internal Magnet Synchronous Motor" by Takeda Yoji, et al. of Ohmsha and in Japanese Unexamined Patent Application Publication No. H7-336919.

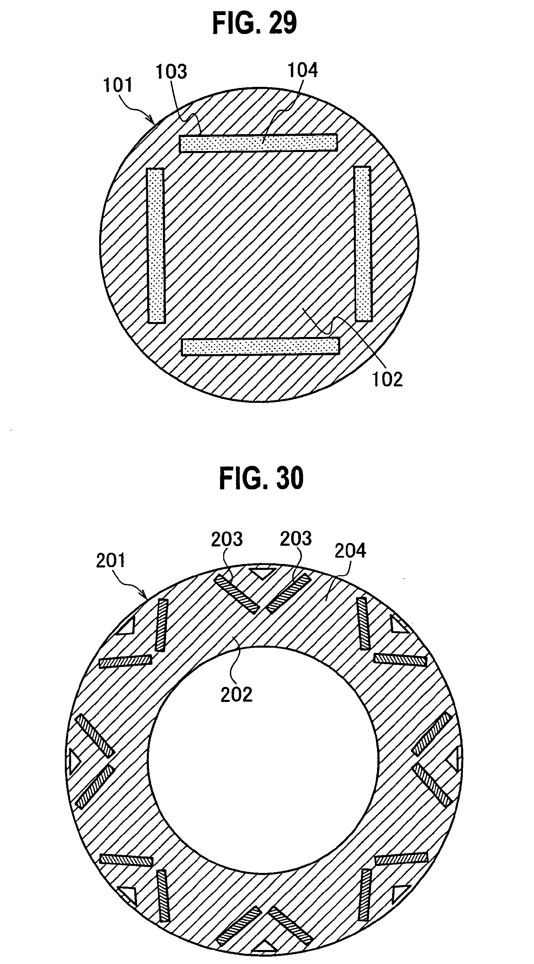

With reference to Fig. 29, the structure of a rotor 101 of an internal permanent magnet motor (IPM) will be explained. A rotor iron core 102 has on its outer circumference a plurality of rectangular cavities 103 at regular intervals in the same number as the number of poles. The rotor 101 has four poles, and therefore, four cavities 103 are arranged to accommodate permanent magnets 104, respectively.

The permanent magnet 104 is magnetized in a radial direction of the rotor 101, or in a right angle direction with respect to a side (long side in Fig. 29) of a rectangular section of the permanent magnet 104 that fronts an air gap face. The permanent magnet 104 is typically an NdFeB permanent magnet having high coercive force so that it may not decrease magnetic force due to a load current. The rotor iron core 102 is formed by laminating magnetic steel sheets having punched holes.

A high-output motor with an excellent variable speed characteristic is, for example, a permanent magnet reluctance type rotating electrical machine (PRM) disclosed in Japanese Unexamined Patent Application Publications No. H11-27913 or No. H11-136912. This sort of permanent magnet reluctance type rotating electrical machine (PRM) is used as an HEV motor. A section of a rotor thereof is shown in Fig. 30. Inside a rotor iron core 202 of the rotor 201, plural pairs of permanent magnets 203 are arranged in V shapes. Between the V-shape-arranged permanent magnets 203, there is an iron core section 204 to form a magnetic pole that generates reluctance torque.

A motor used for driving a hybrid vehicle (HEV), an electric vehicle (EV), an electric train, or the like is required to conduct a variable speed operation in a wide range of rotation speeds. In particular, the HEV or EV motor must carry out a variable speed operation in a wide range of 0 to 15,000 rpm.

In this case, when the motor generates torque, electromagnetic force produces exciting force. If the exciting force resonates with a characteristic vibration mode of a stator iron core, vibration and noise will be produced. In particular, excitation in a circular mode (0th-order mode) in which the whole of the stator iron core uniformly repeats expansion and contraction causes large vibration and noise. It is necessary, therefore, to minimize an electromagnetic force component that causes the 0th-order mode. For a system mounted on a vehicle such as HEV or EV, mass-productivity, lightweight, and compactness must be considered. Then, it is difficult to provide the rotating electrical machine thereof with a support structure that is strongly resistive to vibration.

Conventional measures to cope with vibration and noise include a method of narrowing a variable speed range for operating a motor and a method of passing a speed range in which vibration and noise increase in a very short time. These methods are unemployable for HEV and the like because they deteriorate passenger comfort and acceleration performance. There is a method of applying noise/vibration preventive materials to the driving mechanism of a motor. This, however, makes the motor bulky and unable to be accommodated in an engine space, and therefore, has limits in its vibration/noise reducing effect. It is necessary, therefore, to reduce the vibration of a rotating electrical machine that is a source of vibration and noise as small as possible. In particular, the rotating electrical machine with internal permanent magnet structure, such as IPM is configured to change magnetic resistance depending on a rotor position, to generate reluctance torque. Actively changing magnetic resistance easily causes electromagnetic force harmonics that may produce vibration and noise.

### DISCLOSURE OF INVENTION

The present invention has been made to solve the above-mentioned problems and an object thereof is to provide an internal permanent magnet type rotating electrical machine capable of maintaining compactness and high output and reducing vibration and noise caused by electromagnetic force.

An aspect of the present invention provides a rotating electrical machine having an annular stator and a rotor arranged inside the stator and facing the stator with an air gap interposed between the stator and the rotor, the stator having a stator iron core provided with a plurality of slots at circumferential intervals and a coil received in each of the slots, the rotor having a rotor iron core, a plurality of permanent magnets embedded in a plurality of magnetic pole forming positions that are set along an outer circumference of the rotor iron core, and a plurality of recesses formed at circumferential intervals on a face of the rotor iron core that faces the air gap, the recesses extending in an axial direction of the rotor iron core.

According to the present invention, the rotor iron core is provided with the recesses to change magnetic flux in the air gap and reduce radial electromagnetic force. Accordingly, the present invention can maintain compactness and high output and reduce vibration and noise caused by the electromagnetic force.

Another aspect of the present invention provides a rotating electrical machine having an annular stator and a rotor arranged inside the stator and facing the stator with an air gap interposed between the stator and the rotor, the stator having a stator iron core provided with 48 slots at circumferential intervals and a coil received in each of the slots, the rotor having a rotor iron core, a pair of cavities formed at each of eight magnetic pole forming positions along an outer circumference of the rotor iron core in a V shape that opens toward the air gap, a permanent magnet embedded in each of the cavities, an iron core section magnetized by the permanent magnets at each of the magnetic pole forming positions and forming a magnetic pole on an air gap fronting face of the magnetic pole forming position, a first recess formed at a circumferentially central part of the air gap fronting face of each of the iron core sections, and second and third recesses formed at parts of the air gap fronting face of the rotor iron core other than the circumferentially central part of each iron core section, the second recess being arranged so that an axis passing through a center of circumferential width of the first recess and the center of the rotor and an axis passing through a center of circumferential width of the second recess and the center of the rotor form an angle β2 = τp x 0.226 to 0.265 where τp is a pitch of the magnetic poles, the third recess being arranged so that the axis passing through the center of circumferential width of the first recess and the center of the rotor and an axis passing through a center of circumferential width of the third recess and the center of the rotor form an angle β3 = τp x 0.398 to 0.472, the cavities at each of the magnetic pole forming positions being arranged so that an axis passing through a center of circumferential width of the iron core section and the center of the rotor and an axis passing through the center of circumferential width of an air-gap-side end of a pair of the cavities and the center of the rotor form an angle β4 = τp x -0.25 to -0.35 or τp x 0.25 to 0.35 (a circumferentially minus direction is "+" and the other direction is "-").

According to the present invention, the rotating electrical machine has 8 poles and 48 slots and employs a combination of the first to third recesses and cavity ends, to effectively remove electromagnetic force components that will not completely be removed when they are individually arranged, thereby further reducing vibration and noise.

### BRIEF DESCRIPTION OF DRAWINGS

[Fig. 1] Figure 1 is a sectional view showing a first embodiment of the present invention.
[Fig. 2] Figure 2 is an enlarged sectional view showing a pole area of the first embodiment.
[Fig. 3] Figure 3 is a graph showing an analysis result of electromagnetic force acting on an iron core tooth of a rotating electrical machine provided with the recesses of the first embodiment.
[Fig. 4] Figure 4 is an enlarged sectional view showing a pole area of a second embodiment of the present invention.
[Fig. 5] Figure 5 is a graph showing an analysis result of electromagnetic force acting on an iron core tooth of a rotating electrical machine provided with the recesses of the second embodiment.
[Fig. 6] Figure 6 is an enlarged sectional view showing a pole area of a third embodiment of the present invention.
[Fig. 7] Figure 7 is a graph showing an analysis result of electromagnetic force acting on an iron core tooth of a rotating electrical machine provided with the recesses of the third embodiment.
[Fig. 8] Figure 8 is an enlarged sectional view showing a pole area of a fourth embodiment of the present invention.
[Fig. 9] Figure 9 is an enlarged sectional view showing a pole area of a fifth embodiment of the present invention.
[Fig. 10] Figure 10 is a sectional view showing a pole area of a sixth embodiment of the present invention.
[Fig. 11] Figure 11 is an enlarged sectional view showing an area containing two poles of a seventh embodiment of the present invention.
[Fig. 12] Figure 12 is an enlarged sectional view showing a 1/2-pole area of Fig. 11.
[Fig. 13] Figure 13 is a sectional view showing a pole area of the seventh embodiment of the present invention.
[Fig. 14] Figure 14 is a graph showing a result of magnetic field analysis under load of the seventh embodiment.
[Fig. 15] Figure 15 is a graph showing changes in electromagnetic force when the circumferential position of a recess of the seventh embodiment is changed.
[Fig. 16] Figure 16 is a graph showing changes in electromagnetic force when the width of the recess of the seventh embodiment is changed.
[Fig. 17] Figure 17 is a sectional view showing an area containing two poles of an eighth embodiment of the present invention.
[Fig. 18] Figure 18 is an enlarged sectional view showing a 1/2-pole area of Fig. 17.
[Fig. 19] Figure 19 is a graph showing a result of magnetic field analysis under load of the eighth embodiment.
[Fig. 20] Figure 20 is a graph showing changes in electromagnetic force when the circumferential position of a recess of the eighth embodiment is changed.
[Fig. 21] Figure 21 is a graph showing changes in electromagnetic force when the width of the recess of the eighth embodiment is changed.
[Fig. 22] Figure 22 is a graph showing changes in electromagnetic force when the circumferential position of a recess of the eighth embodiment is changed.
[Fig. 23] Figure 23 is a graph showing changes in electromagnetic force when the width of the recess of the eighth embodiment is changed.
[Fig. 24] Figure 24 is a sectional view showing an area containing two poles of a ninth embodiment of the present invention.
[Fig. 25] Figure 25 is an enlarged sectional view showing a 1/2-pole area of Fig. 24.
[Fig. 26] Figure 26 is a graph showing changes in electromagnetic force when the circumferential position of a recess of the ninth embodiment is changed.
[Fig. 27] Figure 27 is a graph showing a relationship between the circumferential position of a recess and torque ripple according to the ninth embodiment.
[Fig. 28] Figure 28 is an enlarged sectional view showing a 1/2-pole area of a tenth embodiment of the present invention.
[Fig. 29] Figure 29 is a sectional view showing a rotor of a conventional rotating electrical machine.
[Fig. 30] Figure 30 is a sectional view showing a rotor of another conventional rotating electrical machine.

### BEST MODE OF IMPLEMENTING THE INVENTION

The first embodiment of the present invention will be explained with reference to the drawings.

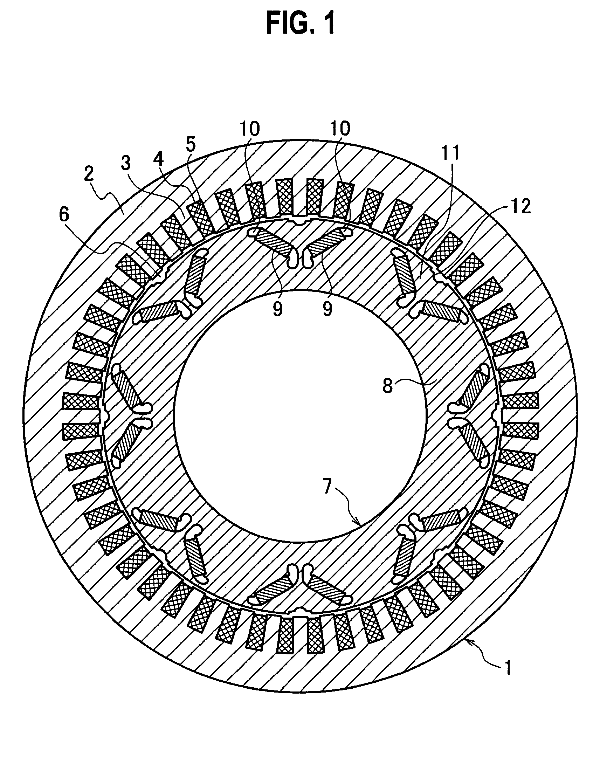

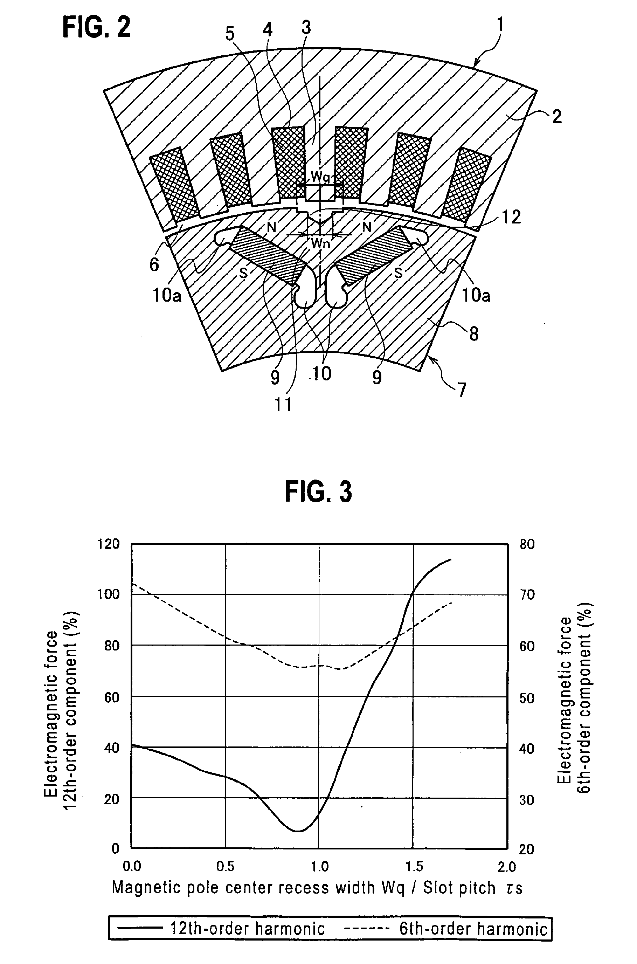

(First embodiment) Figure 1 is a sectional view showing the first embodiment of the present invention and Fig. 2 is an enlarged sectional view showing a pole area of the first embodiment. As shown in Fig. 1, this rotating electrical machine has eight poles and 48 slots. A stator 1 has a stator iron core 2. The stator iron core 2 is formed by laminating a plurality of annular magnetic steel sheets each having iron core teeth 3 and the slots 4 alternated in a circumferential direction. Each slot 4 accommodates a coil 5.

Inside the stator 1, a rotor 7 is arranged with an air gap 6 interposed between them. The rotor 7 has a rotor iron core 8. The rotor iron core 8 is formed by laminating a plurality of annular magnetic steel sheets.

In the rotor iron core 8, a plurality of NdFeB-based permanent magnets 9 are embedded. Namely, the permanent magnets 9 are embedded in pairs of cavities 10 that are arranged at magnetic pole forming positions that are set at regular angular intervals along an outer circumference of the rotor 7. Each pair of the cavities 10 is formed in a V shape that opens toward the air gap 6. Since there are eight poles, there are eight pairs of V-arranged permanent magnets 9. Namely, there are 16 permanent magnets in total. Ends of each cavity 10 protrude from ends of the permanent magnet 9.

An iron core section 11 is formed on the inner side of each pair of the V-arranged permanent magnets 9 such that it is sandwiched between the permanent magnets. The iron core section 11 is magnetized by the pair of V-shape-arranged permanent magnets 9, to form a magnetic pole by the permanent magnets 9 on a face fronting the air gap 6. The iron core section 11 is provided with a recess 12 that is formed on the face fronting the air gap 6 around an axis passing through a center of circumferential width of the iron core section 11 and the center of the rotor 7 and extends in an axial direction of the rotor iron core 8.

As shown in Fig. 2, the recess 12 is shaped to have a wide opening on the air gap 6 side and become narrower on the inner circumferential side. According to this embodiment, with a pitch of the slots 4 of the stator 1 being τs, the opening of the recess 12 has a width Wq = τs x 0.87, the opening has a depth of 0.25 mm, a narrowed part continuous to the opening has a width Wn = τs x 0.35, and a deepest part of the recess 12 has a depth of 2 mm.

In a loaded state, the air gap 6 involves magnetic flux generated by currents of the coils 5 and magnetic flux generated by the permanent magnets 9. The magnetic flux generates torque and radial electromagnetic force. According to the present invention, the iron core section 11 is provided with the recess 12, to change the magnetic flux in the air gap 6, thereby decreasing the radial electromagnetic force.

To verify the action and effect of the recess 12 at the center of the iron core section 11, the rotor 7 is rotated, a magnetic field analysis is carried out on the rotating electrical machine under load, and electromagnetic force acting on the iron core tooth 3 at the time is calculated. An analysis result is shown in Fig. 3. Figure 3 shows radial electromagnetic force by the permanent magnets 9 when the width of the recess 12 of the iron core section 11 is changed, the depth of the recess 12 being 1 mm. An ordinate indicates the radial electromagnetic force acting on the iron core tooth 3 of the stator 1 and an abscissa indicates Wq / τs.

According to this embodiment, a 0th-order mode that causes a deformation of expanding and contracting the stator iron core 2 as a whole is produced by 6th- and 12th-order components of electromagnetic force. To reduce vibration and noise, these components of electromagnetic force must be reduced. As shown in Fig. 3, it is understood that the 6th-order component of electromagnetic force can be reduced with Wq / τs = 0.4 to 1.5 and the 12th-order component of electromagnetic force can be reduced with Wq / τs = 0.3 to 1.1. This results in reducing the electromagnetic force that may cause vibration and realizing the rotating electrical machine that is capable of maintaining compactness and high output and lowering vibration and noise. In connection with Wq and Wn, it is preferable to keep them in the ranges of Wq = τs x (2n + 0.53 to 1.06) and Wn = τs x (2n + 0.20 to 0.49).

According to this embodiment, the recess 12 has the stepped shape that has a wide opening on the air gap 6 side and becomes narrower on the inner circumferential side. If such a stepped shape is not employed, it is preferable to make the circumferential width thereof within the range of τs x (2n + 0.1 to 1.7). The depth of the wide opening of the recess 12 fronting the air gap 6 is preferably within the range of 0.3 to 1.0 times a radial length of the air gap 6 (a distance between an inner circumferential face of the stator 1 and an inner circumferential face of the rotor 2). The depth of the deepest part of the recess 12 is preferably 0.7 to 10 times the radial length of the air gap 6.

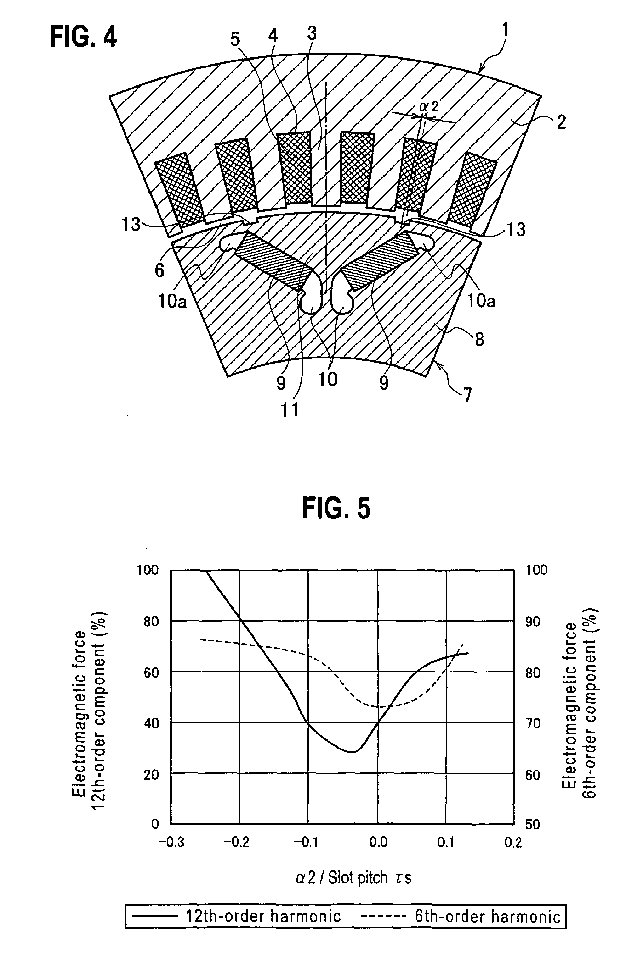

(Second embodiment) Figure 4 is an enlarged sectional view showing a pole area of a rotating electrical machine according to the second embodiment of the present invention. In each of the embodiments that follow, parts corresponding to those of already explained embodiments are represented with the same reference marks to omit repetitive explanations.

This embodiment forms an axially extending recess 13 on a face of a rotor iron core 8 that fronts an air gap 6, so that, in a state that an axis passing through a center of circumferential width of an iron core section 11 and the center of a rotor 7 agrees with an axis passing through a center of circumferential width of an iron core tooth 3 and the center of the rotor 7, an axis passing through a center of circumferential width of the recess 13 formed on the rotor iron core 8 and the center of the rotor 7 and an axis passing through a center of circumferential width of a slot 4 adjacent to the recess 13 and the center of the rotor 7 form an angle α2 = τs x -0.038.

Here, the angle between the recess 13 of the rotor 7 and the slot 4 has a negative value when the central axis of the recess 13 with respect to the central axis of the slot 4 is positioned on the central axis side of a magnetic pole produced by permanent magnets 9 and a positive value when the same is positioned on the opposite side. As shown in Fig. 4, the recesses 13 are symmetrically arranged with respect to a symmetry axis that is the central axis of the iron core section 11. For the other magnetic poles, the recesses 13 are similarly formed.

In a loaded state, the air gap 6 involves magnetic flux generated by currents of coils 5 and magnetic flux generated by the permanent magnets 9. The magnetic flux generates torque and radial electromagnetic force. According to this embodiment, the rotor iron core 8 is provided with the recesses 13, to change the magnetic flux in the air gap 6, thereby decreasing the radial electromagnetic force.

To verify the action and effect of the recesses 13, a rotating electrical machine provided with the recesses 12 of the first embodiment and the recesses 13 is used as an analytic model and a magnetic field analysis under load is carried out with the rotor 7 being rotated. Electromagnetic force acting on the iron core tooth 3 at this time is calculated. A result of the analysis is shown in Fig. 5. In Fig. 5, an ordinate indicates radial electromagnetic force acting on the iron core tooth 3 and an abscissa indicates α2 / τs, to show radial electromagnetic force with respect to a change in the width of the recess 13.

According to this embodiment, a 0th-order mode that causes a deformation of expanding and contracting the stator iron core 2 as a whole is produced by 6th- and 12th-order components of electromagnetic force. To reduce vibration and noise, these components of electromagnetic force must be reduced. As shown in Fig. 5, it is understood that the 6th-order component of electromagnetic force can be reduced with α2 / τs = -0.1 to 0.1 and the 12th-order component of electromagnetic force can be reduced with α2 / τs = -0.14 to 0.04.

It is preferable that the position of the recess 13 is α2 / τs = -0.1 to 0, the width of the recess 13 is 2° in central angle (an angle between circumferential ends of the recess with the center of the rotor 7 being a central point), and the depth is 0.5 mm. These conditions can reduce the 6th-order component of electromagnetic force to 75% and the 12th-order component to 28%. This results in reducing the electromagnetic force that may cause vibration and realizing the rotating electrical machine that is capable of maintaining compactness and high output and lowering vibration and noise.

It is preferable that the depth of the recess 13 is within the range of 0.4 to 4 times a radial length of the air gap 6 and the circumferential width of the recess 13 within the range of 0.2 to 0.6 times the pitch of the slots 4.

According to this embodiment, the number of the recesses 13 for each magnetic pole is the same and the recesses 13 are symmetrically arranged with respect to the central axis passing through the center of circumferential width of the magnetic pole and the center of the rotor iron core 8. Namely, the recesses 13 are evenly arranged along the circumference, to make the manufacturing easy. Within the range of one magnetic pole, a pitch of the recesses 13 differs from a pitch of the slots 4. With this, the recesses 13 do not simultaneously front the slots 4 in any one of stationary and rotating states. This is desirable for reducing unnecessary components of electromagnetic force.

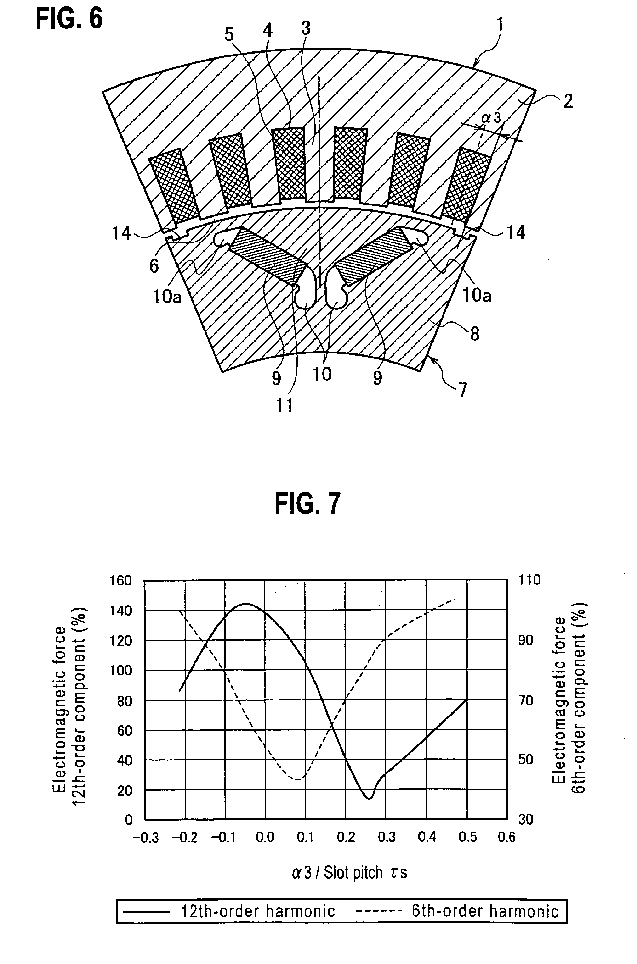

(Third embodiment) Figure 6 is an enlarged sectional view showing a pole area of the third embodiment of the present invention. This embodiment forms an axially extending recess 14 on a face of a rotor iron core 8 that fronts an air gap 6, so that, in a state that an axis passing through a center of circumferential width of an iron core section 11 of a rotor 7 and the center of the rotor 7 agrees with an axis passing through a center of circumferential width of an iron core tooth 3 of a stator 1 and the center of the rotor 7, an axis passing through a center of circumferential width of the recess 14 formed on the rotor iron core 8 and the center of the rotor 7 and an axis passing through a center of circumferential width of a slot 4 adjacent to the recess 14 and the center of the rotor 7 form an angle α3 = τs x 0.249.

Here, the angle between the recess 14 and the slot 4 has a negative value when the central axis of the recess 14 with respect to the central axis of the slot 4 is positioned on the central axis side of a magnetic pole produced by permanent magnets 9 and a positive value when the same is positioned on the opposite side. The recesses 14 are symmetrically arranged with respect to a symmetry axis that is the central axis of the iron core section 11.

In a loaded state, the air gap 6 involves magnetic flux generated by currents of coils 5 and magnetic flux generated by the permanent magnets 9. The magnetic flux generates torque and radial electromagnetic force. According to the present invention, the rotor iron core 8 is provided with the recesses 14, to change the magnetic flux in the air gap 6, thereby decreasing the radial electromagnetic force.

To verify the action and effect of the recesses 14, a rotating electrical machine provided with the recesses 12 of the first embodiment and the recesses 14 is used as an analytic model and a magnetic field analysis under load is carried out with the rotor 7 being rotated.
Electromagnetic force acting on the iron core tooth 3 at this time is calculated. A result of the analysis is shown in Fig. 7. In Fig. 7, an ordinate indicates radial electromagnetic force acting on the iron core tooth 3 and an abscissa indicates α3 / τs, to show radial electromagnetic force with respect to a change in the width of the recess 14.

According to this embodiment, a 0th-order mode that causes a deformation of expanding and contracting the stator iron core 2 as a whole is produced by 6th- and 12th-order components of electromagnetic force. To reduce vibration and noise, these components of electromagnetic force must be reduced.

As shown in Fig. 7, it is understood that the 6th-order component of electromagnetic force can be reduced with α3 / τs = -0.12 to 0.26 and the 12th-order component of electromagnetic force can be reduced with α3 / τs = 0.17 to 0.33. It is preferable that the position of the recess 14 is α3 / τs = 0.2 to 0.26, the width of the recess 14 is 2° in central angle (an angle between circumferential ends of the recess 14 with the center of the rotor 7 being a central point), and the depth is 0.5 mm. These conditions can reduce the 6th-order component of electromagnetic force to 80% and the 12th-order component to 14%. It is preferable that the depth of the recess 14 is within the range of 0.4 to 4 times a radial length of the air gap 6 and the circumferential width of the recess 14 within the range of 0.2 to 0.6 times the pitch of the slots 4.

With this, the electromagnetic force that may cause vibration can be reduced to realize the rotating electrical machine that is capable of maintaining compactness and high output and lowering vibration and noise.

According to this embodiment, the number of the recesses 14 for each magnetic pole is the same and the recesses 14 are symmetrically arranged with respect to the central axis passing through the center of circumferential width of the magnetic pole and the center of the rotor iron core 8. Namely, the recesses 14 are evenly arranged along the circumference, to make the manufacturing easy. Within the range of one magnetic pole, a pitch of the recesses 14 differs from a pitch of the slots 4. With this, the recesses 14 do not simultaneously front the slots 4 in any one of stationary and rotating states. This is desirable for reducing unnecessary components of electromagnetic force.

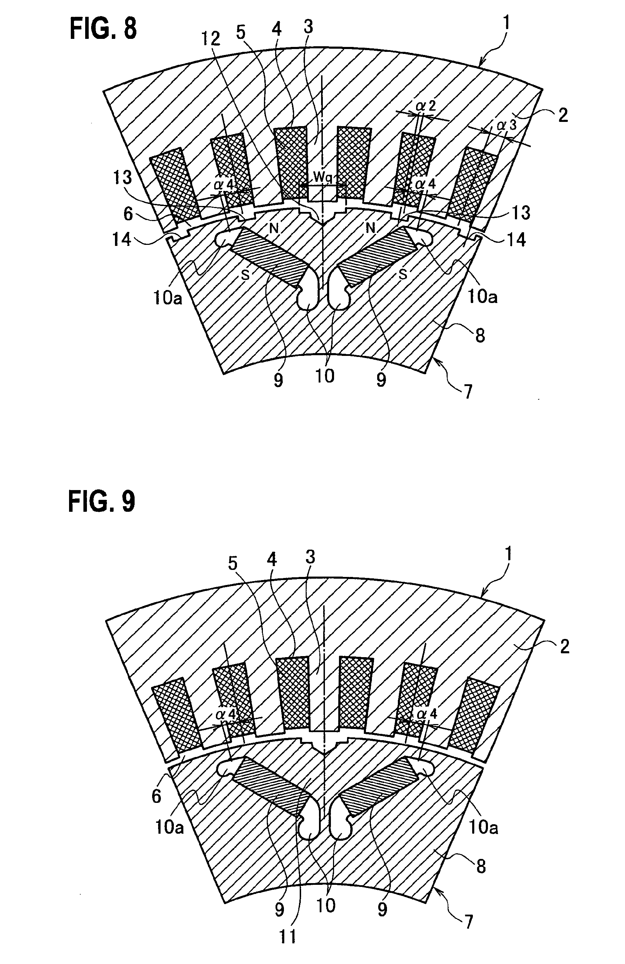

(Fourth embodiment) Figure 8 is an enlarged sectional view showing a pole area of the fourth embodiment of the present invention. The rotating electrical machine of this embodiment has the recesses 12 explained in the first embodiment, the recesses 13 explained in the second embodiment, and the recesses 14 explained in the third embodiment.

In a loaded state, an air gap 6 involves magnetic flux generated by currents of coils 5 and magnetic flux generated by permanent magnets 9. The magnetic flux generates torque and radial electromagnetic force. According to this embodiment, a 0th-order mode that causes a deformation of expanding and contracting a stator iron core 2 as a whole is produced by 6th- and 12th-order components of electromagnetic force. To reduce vibration and noise, these components of electromagnetic force must be reduced.

To verify the action and effect of this embodiment, a magnetic field analysis under load is carried out with a rotor 7 being rotated and electromagnetic force acting on an iron core tooth 3 at this time is calculated. The position of the recess 13 is α2 / τs = -0.1 to 0, the width of the recess 13 is 2 mm, the depth is 0.5 mm, the position of the recess 14 is α3 / τs = 0.2 to 0.26, the width of the recess 14 is 2 mm, and the depth is 0.5 mm. These conditions can reduce the 6th-order component of electromagnetic force to 70% and the 12th-order component to 12%. Namely, both the 6th- and 12th-order components of electromagnetic force can simultaneously be reduced. With this, the electromagnetic force that may cause vibration can be reduced to realize the rotating electrical machine that is capable of maintaining compactness and high output and lowering vibration and noise.

According to this embodiment, the numbers of the recesses 13 and 14 for each magnetic pole are the same and the recesses 13 and 14 are symmetrically arranged with respect to the central axis passing through the center of circumferential width of the magnetic pole and the center of a rotor iron core 8. Namely, the recesses 13 and 14 are evenly arranged along the circumference, to make the manufacturing easy.

Within the range of one magnetic pole, pitches of the recesses 13 and 14 each differ from a pitch of the slots 4. In addition, on one side of the magnetic pole, a pitch of the recesses 13 and 14 positioned in 1/2 of the area of the magnetic pole differs from the pitch of the slots 4. With this, the recesses 13 and 14 do not simultaneously front the slots 4 in any one of stationary and rotating states. This is desirable for reducing unnecessary components of electromagnetic force. Combining the first to third recesses 12 to 14 together can effectively remove electromagnetic force components that will not completely be removed when they are individually arranged, thereby further reducing vibration and noise.

(Fifth embodiment) Figure 9 is an enlarged sectional view showing a pole area of the fifth embodiment of the present invention. In a state that an axis passing through a center of circumferential width of an iron core section 11 and the center of a rotor 7 agrees with an axis passing through a center of circumferential width of an iron core tooth 3 and the center of the rotor 7, this embodiment makes, at each magnetic pole, an axis passing through a center of circumferential width of an end 10a of one cavity 10 on the air gap 6 side and the center of the rotor 7 and an axis passing through a center of circumferential width of a slot 4 adjacent to the end 10a and the center of the rotor 7 form an angle α4 = τs x 0.25. Permanent magnets 9 and the ends 10a of the cavities 10 are symmetrically arranged with respect to a symmetry axis that is a central axis of the iron core section 11. Supposing that an angle in a negative circumferential direction is "+" and an angle in the other direction is "-," the position of the end 10a of the other cavity 10 adjacent to the air gap 6 is α4 = - τs x 0.25.

In the vicinity of the air gap 6, each pole has two ends 10a of the cavities 10 of the permanent magnets 9. The positions of these two ends 10a relative to the slots 4 differ from each other by τs x (0.25 - (-0.25)) = τs x 0.5. The end 10a of the cavity 10 formed by the permanent magnet 9 and the thickness thereof generates harmonic magnetic flux. This harmonic magnetic flux can be reduced by fixing the position of the end 10a of the cavity 10 at the above-mentioned position. Namely, the harmonic components of electromagnetic force can be reduced.

The values -0.25 and 0.25 that determine the positions of the ends 10a of the cavities 10 are allowed to have some allowances to provide the same effect. If the end 10a of the cavity 10 little protrudes from the end of the permanent magnet 9 and is substantially equal to the end of the permanent magnet 10, the central axis of the end 10a of the cavity 10 can be considered as the central axis of the end of the permanent magnet 9 when determining the position thereof.

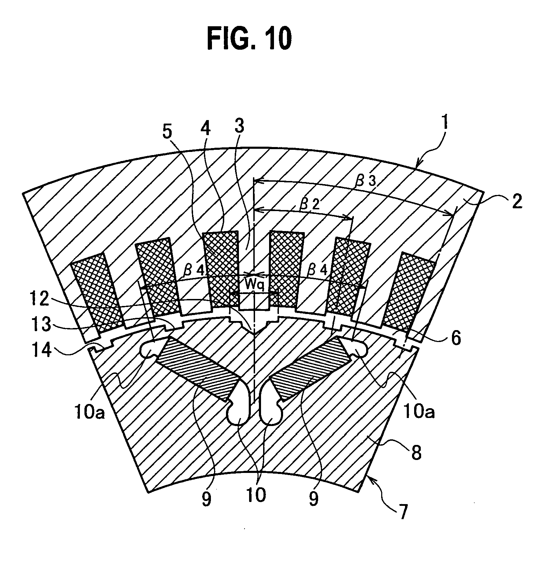

(Sixth embodiment) Figure 10 is an enlarged sectional view showing a pole area of the sixth embodiment of the present invention. This embodiment forms an axially extending recess 13 on a face of a rotor iron core 8 that fronts an air gap 6 so that an axis passing through a center of circumferential width of a recess 12 (first recess) at a circumferential center of an iron core section 11 and the center of a rotor 7 and an axis passing through a center of circumferential width of the recess 13 (second recess) formed on the rotor iron core 8 and the center of the rotor 7 form an angle β2 = τp x 0.226 to 0.265 where τp is a magnetic pole pitch (i.e., a distance between axes passing through circumferential width centers of the adjacent iron core sections 11).

In addition, there is formed a recess 14 (third recess) on the face of the rotor iron core 8 that fronts the air gap 6 so that the axis passing through the center of circumferential width of the recess 12 formed at the circumferential center of the iron core section 11 and the center of the rotor 7 and an axis passing through a center of circumferential width of the recess 14 formed on the rotor iron core 8 and the center of the rotor 7 form an angle β3 = τp x 0.398 to 0.472.

In addition, an end 10a of a cavity 10 on the air gap 6 side is arranged so that the axis passing through the center of circumferential width of the iron core section 11 and the center of the rotor 7 and an axis passing through a center of circumferential width of the end 10a on the air gap 6 side and the center of the rotor 7 form an angle β4 = τp x 0.3.

The ends 10a of the cavities 10 on the air gap 6 side are symmetrically arranged with respect to a symmetry axis that is the central axis of the iron core section 11. Namely, the end 10a of the other of the symmetrically arranged cavities 10 on the air gap 6 side is arranged at a position of β4 = τp x (-0.3). Even if the positions of these ends are slightly dislocated, the same action and effect are obtainable. In practice, manufacturing errors will be involved. Accordingly, the same effect will be obtained in the ranges of β4 = τp x 0.25 to 0.35 and τp x - 0.25 to -0.35.

A rotating electrical machine having 8 poles and 48 slots according to this embodiment can reduce electromagnetic force components that may cause vibration and noise, like the embodiments mentioned above.

Combining the first to third recesses 12 to 14 and the ends 10a of the cavities together can effectively remove electromagnetic force components that will not completely be removed when they are individually arranged, thereby further reducing vibration and noise.

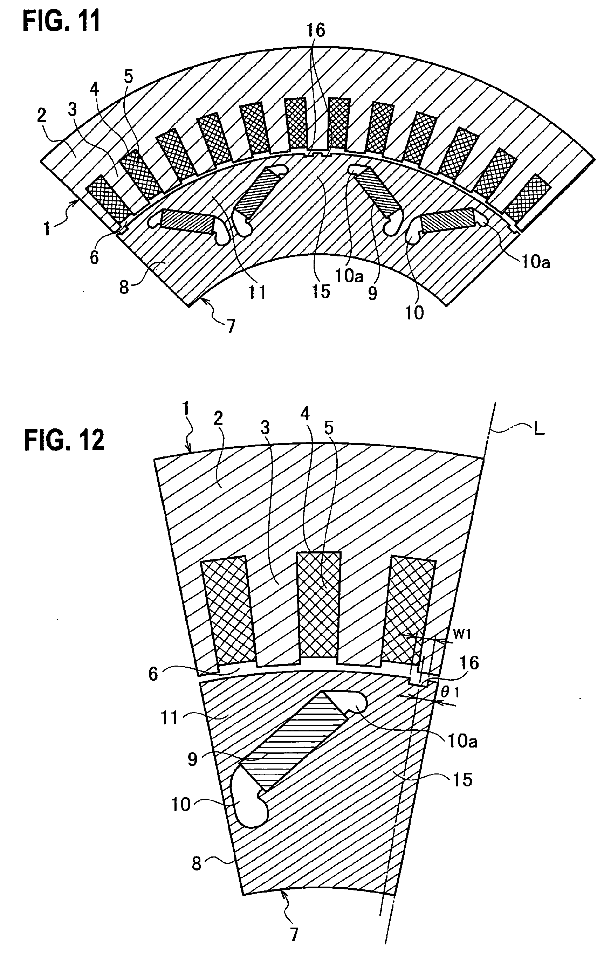

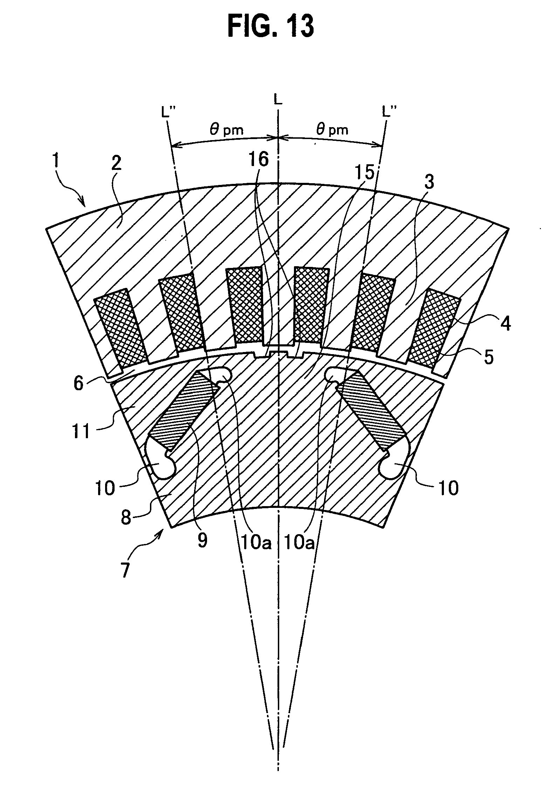

(Seventh embodiment) Figure 11 is a sectional view showing an area containing two poles of the seventh embodiment of the present invention and Fig. 12 is an enlarged sectional view showing a 1/2-pole area of Fig. 11, and Fig. 13 is a sectional view showing a pole area. This embodiment forms, like the first embodiment, eight iron core sections 11 along an outer circumference of a rotor iron core 8. In each iron core section 11, a pair of permanent magnets 9 are embedded in a V shape to form a magnetic pole. Between the iron core sections 11, there is formed an iron core section 15 serving as a reluctance torque magnetic pole that generates reluctance torque.

An end 10a of a cavity 10 in which the permanent magnet 9 is embedded protrudes from an end of the permanent magnet 9 and forms a void to suppress leakage magnetic flux and relax stress caused by centrifugal force during rotation. Among these ends 10a, those that are in the vicinity of an air gap 6 and sandwich the iron core section 15 between them are arranged so that two axes passing through circumferential width centers of them and the center of the rotor iron core 8 form an angle θ2pm = τs x (n + 0.5) where n is an integer. These two ends 10a may each be arranged at a circumferential center position θpm = τs x (n + 0.25) where θpm is, as shown in Fig. 13, an angle between an axis L passing through a center of circumferential width of the iron core section 15 serving as a reluctance torque magnetic pole and the center of the rotor iron core 8 and an axis L" passing through the center of circumferential width of the end 10a and the center of the rotor iron core 8.

More precisely, the end 10a is positioned to satisfy 32° / (p / 2) ≤ θpm ≤ 40° / (p / 2) where p is the number of poles. This provides preferable results of achieving large torque and reducing electromagnetic force.

This embodiment forms, as shown in Fig. 12, axially extending recesses 16 on the face of the iron core section 15 that fronts the air gap 6. The two recesses 16 are symmetrically arranged with respect to a symmetry axis that is the axis L passing through the center of circumferential width of the iron core section 15 and the center of the rotor iron core 8.

The circumferential position of the recess 16 is θ1 = τs x (n + 0.16 to 0.37) where θ1 is an angle between the axis L passing through the center of circumferential width of the iron core section 15 and the center of the rotor iron core 8 and an axis passing through a widthwise center of the recess 16 and the center of the rotor iron core 8 and n is an integer.

The depth of the recess 16 is 0.5 mm. According to another embodiment, the recess 16 may have a stepped shape with an opening depth of 0.25 mm and an overall depth of 0.5 mm, to provide a smoothly changing characteristic. The depth of the recess 16 may be 0.2 to 2.0 times a radial length of the air gap 6. This is desirable for increasing an electromagnetic force reduction effect and substantially preventing a torque decrease.

The action and effect of the recesses 16 will be explained. In a loaded state, the air gap 6 involves magnetic flux generated by currents of coils 5 and magnetic flux generated by the permanent magnets 9. The magnetic flux generates torque and radial electromagnetic force. This embodiment provides the iron core section 15 that generates reluctance torque with the recesses 16, to change magnetic flux in the air gap and decrease the radial electromagnetic force.

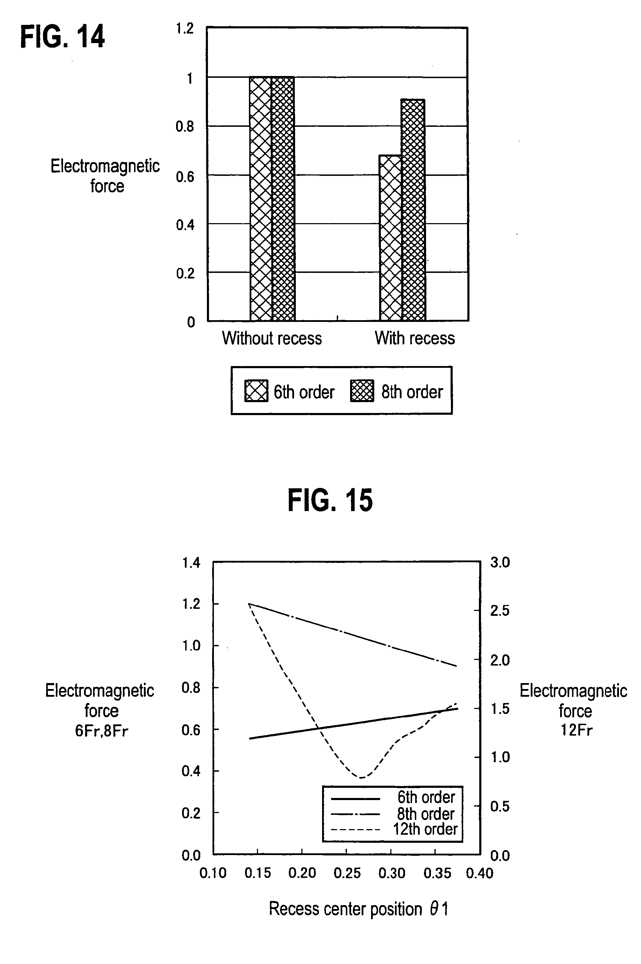

To verify the action and effect of the recesses 16, a magnetic field analysis under load is carried out with a rotor 7 being rotated and electromagnetic force acting on an iron core tooth 3 at this time is calculated. A result of the analysis is shown in Fig. 14.

In the rotating electrical machine having eight poles and 48 slots according to this embodiment, a 0th-order mode that causes a deformation of expanding and contracting a stator iron core 2 as a whole is produced by 6th- and 12th-order components of electromagnetic force. To reduce vibration and noise, these components of electromagnetic force must be reduced.

Figure 14 shows comparison of radial electromagnetic force between the rotating electrical machine according to this embodiment having the recesses 16 on the iron core section 15 serving as a magnetic pole that generates reluctance torque and a conventional rotating electrical machine (without the recesses 16). The electromagnetic force is normalized with the electromagnetic force of the conventional machine being 1. As shown in Fig. 14, it is understood that the 6th-order component of electromagnetic force is decreased to 0.67.

Next, a relationship between a circumferential position of the recess 16 and electromagnetic force will be explained. A change in electromagnetic force with respect to a change in the circumferential center position of the recess 16 is examined according to a magnetic field analysis. Figure 15 shows a range in which electromagnetic force decreases when the circumferential position θ1 of the center of the recess 16 is changed. An ordinate of Fig. 15 indicates values normalized with the electromagnetic force of the conventional machine being 1 and an abscissa indicates values normalized with the pitch τs of the slots 4.

When θ1 = τs x (0.16 to 0.37), the 6th-order component of electromagnetic force is equal to or lower than 0.7 and the 12th-order component of electromagnetic force contrarily increases. However, it is contained within double. In this way, the recesses 16 can reduce the 6th-order component of electromagnetic force to about 0.4.

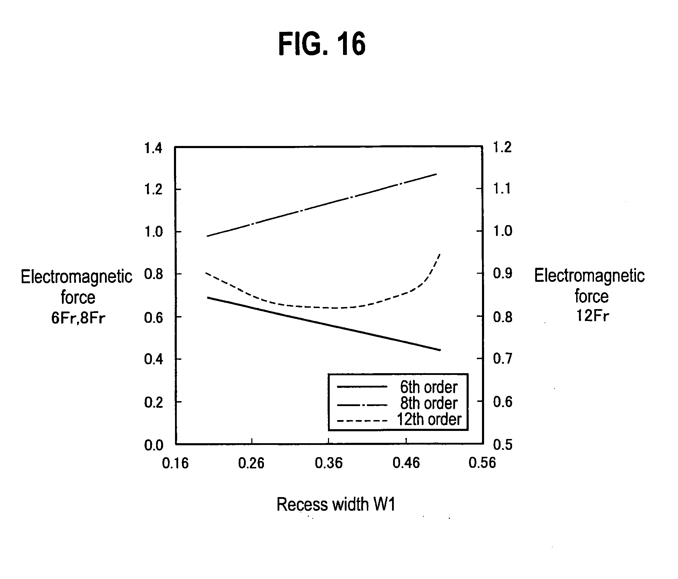

Figure 16 shows a change in electromagnetic force with respect to a change in the width W1 of the recess 16 when the recess 16 is in the range shown in Fig. 15. The width W1 is expressed with a central angle (an angle between an axis passing through one side edge of the recess 16 and the center of the rotor iron core 8 and an axis passing through the other side edge of the recess 16 and the center of the rotor iron core 8) and is normalized with the slot pitch τs.

It is shown that this embodiment can reduce the electromagnetic force that causes vibration and can provide a rotating electrical machine of low vibration and low noise. The end 10a, which is on the air gap 6 side, of each cavity 10 in which the permanent magnet 9 is inserted is arranged to satisfy θ2pm = τs x (n + 0.5). When seen from the iron core teeth 3 of the stator 1, the symmetrically arranged two cavity ends 10a are shifted by 0.5 slot pitches, to relax the influence of electromagnetic change and torque pulsation caused by the slots 4.

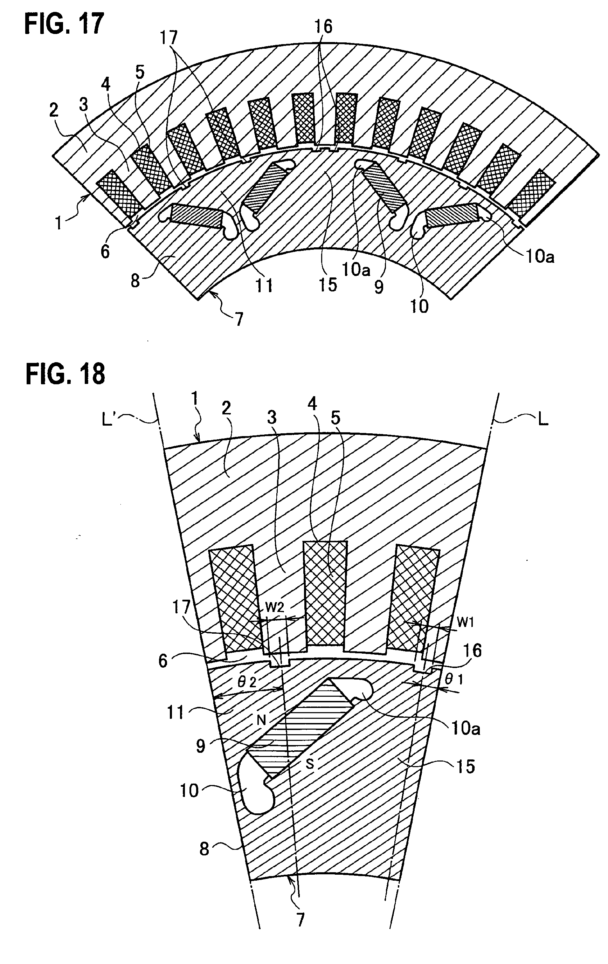

(Eighth embodiment) Figure 17 is a sectional view showing an area containing two poles of the eighth embodiment of the present invention and Fig. 18 is an enlarged sectional view showing a 1/2-pole area of Fig. 17. In addition to the configuration of the seventh embodiment, this embodiment forms an axially extending recess 17 on a face of an iron core section 11 fronting an air gap 6, the iron core section 11 being a magnetic pole produced by permanent magnets 9. Two recesses 17 are symmetrically arranged with respect to a symmetry axis that is an axis L' passing through a center of circumferential width of the iron core section 11 and the center of a rotor iron core 8. Each of these recesses is positioned in the vicinity of an end of the permanent magnet 9 on the air gap 6 side.

The depth of the recess 17 may be 0.2 to 2.0 times a radial length of the air gap 6. This is desirable for increasing an electromagnetic force reduction effect and substantially preventing a torque decrease.

The action and effect of this embodiment will be explained. In a loaded state, the air gap 6 involves magnetic flux generated by currents of coils 5 and magnetic flux generated by the permanent magnets 9. The magnetic flux generates torque and radial electromagnetic force. This embodiment provides an iron core section 15 that generates reluctance torque with recesses 16 and the iron core section 11 that is a magnetic pole produced by the permanent magnets 9 with the recesses 17, to change magnetic flux in the air gap and decrease the radial electromagnetic force.

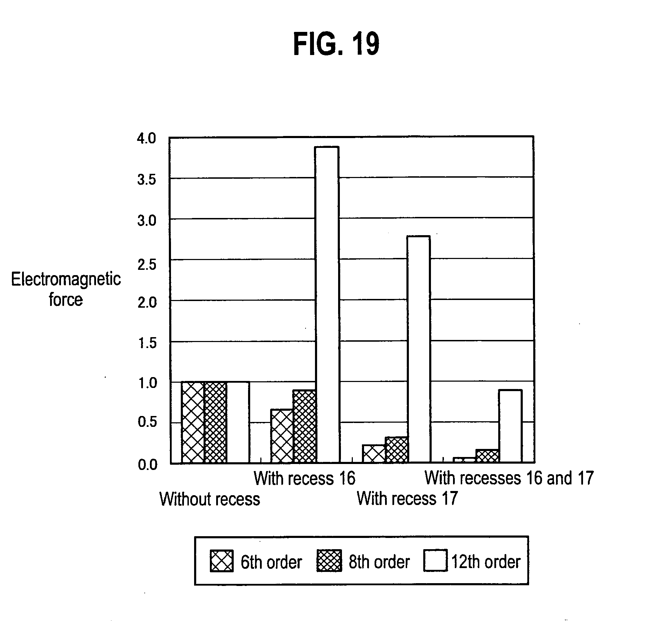

To verify the action and effect of the recesses 16 and 17, a magnetic field analysis under load is carried out with a rotor 7 being rotated and electromagnetic force acting on an iron core tooth 3 at this time is calculated. A result of the analysis is shown in Fig. 19.

In the rotating electrical machine having eight poles and 48 slots according to this embodiment, a 0th-order mode that causes a deformation of expanding and contracting a stator iron core 2 as a whole is produced by 6th- and 12th-order components of electromagnetic force. To reduce vibration and noise, these components of electromagnetic force must be reduced.

Figure 19 shows comparison of radial electromagnetic force among the rotating electrical machine according to this embodiment having the recesses 16 and 17, the rotating electrical machine having the recesses 16 or 17 of the present invention, and a conventional rotating electrical machine. The electromagnetic force is normalized with the electromagnetic force of the conventional machine being 1. The rotating electrical machine having the recesses 16 or 17 can reduce the 6th-order component of electromagnetic force to 0.25 to 0.67. The rotating electrical machine according to the present invention having the recesses 16 and 17 can extremely reduce the same to 0.04. At the same time, it can reduce the 12th-order component of electromagnetic force to 0.9.

When reducing the 6th- and 12th-order components of electromagnetic force by forming, for example, recesses, these components of electromagnetic force generally show a trade-off relationship, and therefore, it is difficult to reduce both of them. However, as shown in Fig. 19, the rotating electrical machine according to the present invention having the recesses 16 and 17 can reduce the 12th-order component of electromagnetic force lower than that of the conventional machine and the 6th-order component of electromagnetic force to a extremely low level of 0.04.

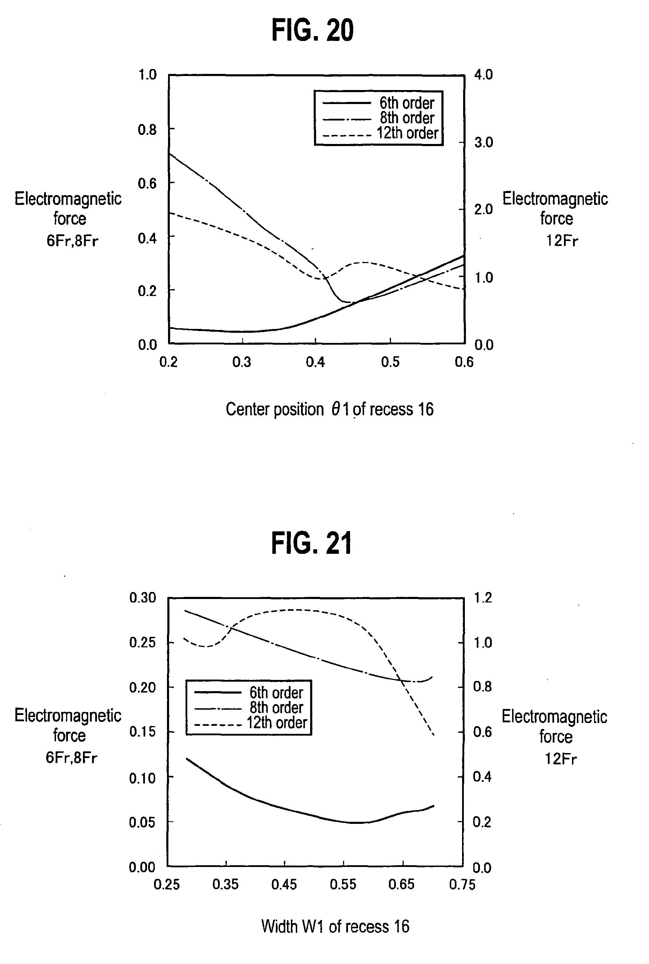

Next, in connection with the rotating electrical machine of the present invention having the recesses 16 and 17, the recesses 16 will be explained in detail. First, a relationship between a circumferential position of the recess 16 and electromagnetic force will be explained. A change in electromagnetic force with respect to a change in the circumferential center position of the recess 16 is examined according to a magnetic field analysis. Figure 20 shows a range in which electromagnetic force decreases when the circumferential position of the recess 16 is changed. An ordinate of Fig. 20 indicates values normalized with the electromagnetic force of the conventional machine being 1 and an abscissa indicates values normalized with the pitch τs of the slots 4. When θ1 = τs x (0.2 to 0.6), the 6th-order component of electromagnetic force is equal to or lower than 0.3 and the 12th-order component of electromagnetic force within 2. In this way, the recesses 16 can reduce the 6th-order component of electromagnetic force to 0.3.

Figure 21 shows a change in electromagnetic force with respect to a change in the width W1 of the recess 16 when the recess 16 is in the range shown in Fig. 20. The width W1 of the recess 16 is expressed with a central angle and is normalized with the slot pitch τs. Within the range of W1 = τs x (0.4 to 0.7), the 12th-order component of electromagnetic force can be reduced to 1.5 or lower and the 6th-order component of electromagnetic force to a very small level of 0.075 or lower (within the range of 1.5 times a minimum value of the 6th-order component of electromagnetic force). It is known that a preferable result is obtained if θ1 = τs x (n + 0.2 to 0.6) where n is an integer and W1 = τs x (n + 0.4 to 0.7) where n is 0 or a natural number.

More precisely, with the number of slots of the stator 1 per phase per pole being 2 and the number of poles being p, it is known that a more preferable result is obtained with the conditions of θ1 = (10° to 14°) / (p / 2) and W1 = (12° to 18°) / (p / 2). Here, the number of slots per phase per pole is a value obtained from "the total number of slots / (the number of phases x the number of poles).

In the rotating electrical machine of the present invention having the recesses 16 and 17, a role of the recess 17 will be explained in detail. A change in electromagnetic force with respect to a change in the circumferential center position of the recess 17 is examined according to a magnetic field analysis.

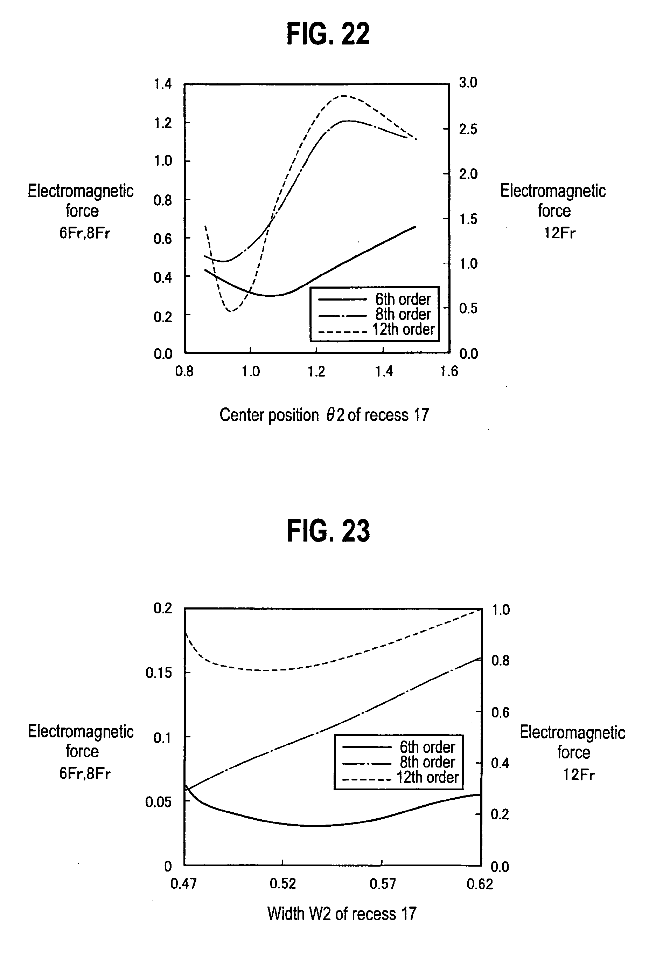

Figure 22 shows a range in which electromagnetic force decreases when the circumferential position θ2 of the recess 17 is changed, where θ2 is an angle between an axis passing through the circumferential center of the magnetic pole 11 produced by the permanent magnets 9 and the center of the rotor iron core 8 and an axis passing through the circumferential center of the recess 17 and the center of the rotor iron core 8. An ordinate of Fig. 22 indicates values normalized with electromagnetic force of a conventional machine being 1 and an abscissa indicates θ2 normalized with the slot pitch τs. When θ2 = τs x (0.85 to 1.3), the 6th-order component of electromagnetic force can be reduced to 0.45 or lower (in the range of 1.5 times a minimum value of the 6th-order component of electromagnetic force). In this way, the recesses 17 can reduce the 6th-order component of electromagnetic force to 0.45 or lower.

Figure 23 shows a change in electromagnetic force with respect to a change in the width W2 of the recess 17 when the recess 17 is in the range shown in Fig. 22. The width W2 of the recess 17 is expressed with a central angle and is normalized with the slot pitch τs. Within the range of W2 = τs x (0.47 to 0.6), the 12th-order component of electromagnetic force can be reduced to 1 or lower and the 6th-order component of electromagnetic force to a very small level of 0.07 or lower.

In this way, the present invention can reduce the electromagnetic force that causes vibration and provide a rotating electrical machine of low vibration and low noise.

It is known that a preferable result is obtained if θ2 = τs x (n + 0.85 to 1.3) where n is an integer and W2 = τs x (n + 0.47 to 0.6) where n is 0 or a natural number. More precisely, with the number of slots of the stator 1 per phase per pole being 2 and the number of poles being p, it is known that a more preferable result is obtained with the conditions of θ2 = (26° to 39°) / (p / 2) and W2 = (14° to 18°) / (p / 2). An end 10a of each cavity 10 is arranged to satisfy θ2pm = τs x (n + 0.5). When seen from iron core teeth 3 of the stator 1, symmetrically arranged two ends 10a are shifted by 0.5 slot pitches, to relax the influence of electromagnetic change and torque pulsation caused by the slots.

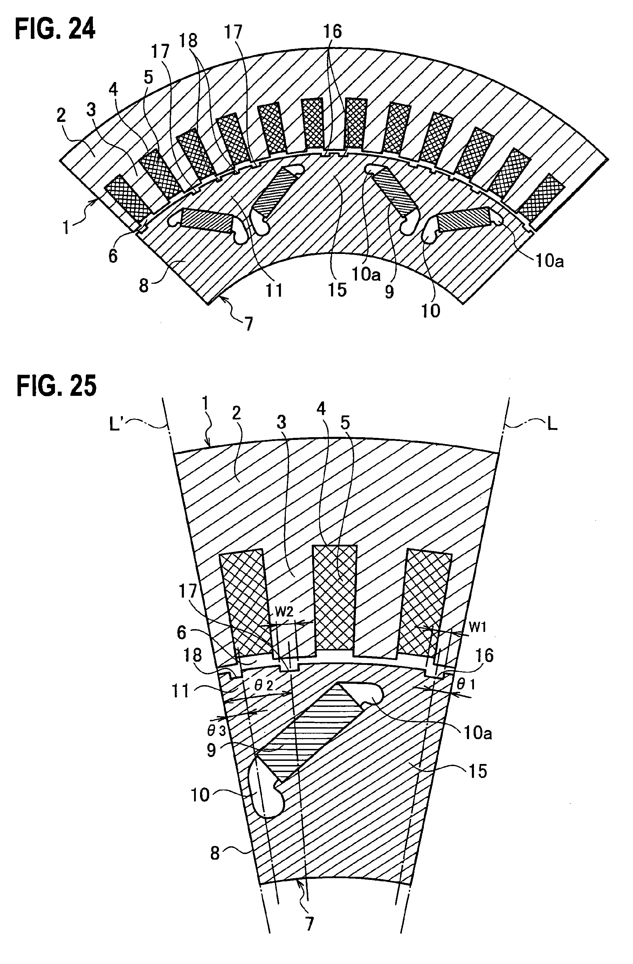

(Ninth embodiment) Figure 24 is a sectional view showing an area containing two poles of the ninth embodiment of the present invention and Fig. 25 is an enlarged sectional view showing a 1/2-pole area of Fig. 24. In addition to the configuration of the eighth embodiment, this embodiment forms an axially extending recess 18 at a circumferentially central part of a face of an iron core section 11 that is a magnetic pole produced by permanent magnets 9 and fronts an air gap 6. Two recesses 18 are symmetrically arranged with respect to a symmetry axis that is an axis L' passing through a center of circumferential width of the iron core section 11 and the center of a rotor iron core 8. The depth of the recess 18 may be 0.2 to 3.0 times a radial length of the air gap 6. This is desirable for increasing an electromagnetic force reduction effect and substantially preventing a torque decrease.

The action and effect of this embodiment will be explained. In a loaded state, the air gap 6 involves magnetic flux generated by currents of coils 5 and magnetic flux generated by the permanent magnets 9. The magnetic flux generates torque and radial electromagnetic force. The present invention provides an iron core section 15 that generates reluctance torque with recesses 16, the iron core section 11 that is a magnetic pole produced by the permanent magnets 9 with the recesses 17, and the circumferentially central part of the iron core section 11 with the recesses 18, to change magnetic flux in the air gap 6 and decrease the radial electromagnetic force and torque ripple.

To verify the action and effect of the recesses 16 to 18, a magnetic field analysis under load is carried out with a rotor 7 being rotated and electromagnetic force acting on an iron core tooth 3 at this time is calculated.

In the rotating electrical machine having eight poles and 48 slots according to this embodiment, a 0th-order mode that causes a deformation of expanding and contracting a stator iron core 2 as a whole is produced by 6th- and 12th-order components of electromagnetic force. To reduce vibration and noise, these components of electromagnetic force must be reduced. A change in electromagnetic force with respect to a change in the circumferential center position of the recess 18 is examined according to a magnetic field analysis. There is a need of maintaining maximum torque and suppress torque ripple. For this, a torque analysis is also carried out.

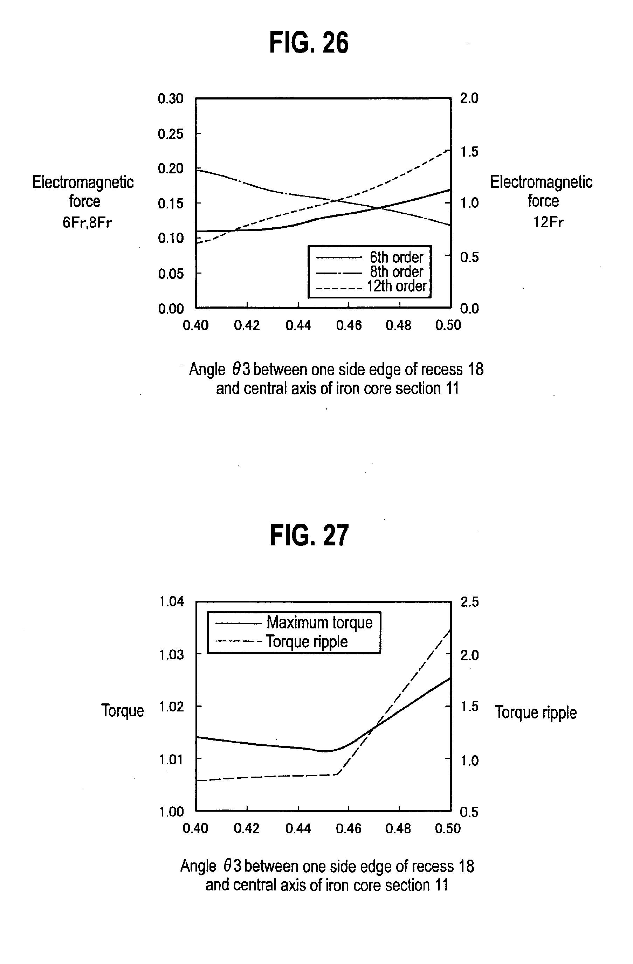

Figure 26 shows a range in which electromagnetic force decreases when the circumferential position of the recess 18 is changed. An ordinate of Fig. 26 indicates values normalized with the electromagnetic force of a conventional machine being 1 and an abscissa indicates an angle θ3 representative of the position of the recess 18 normalized with a slot pitch τs. Figure 27 shows maximum torque and torque ripple at this time. An ordinate indicates values normalized with the torque and torque ripple of the conventional machine being 1.

The angle θ3 is an angle between an axis L' passing through a center of circumferential width of the iron core section 11 that is a magnetic pole produced by the permanent magnets 9 and the center of the rotor iron core 8 and an axis passing through a side edge of the recess 18 distal from the axis L' and the center of the rotor iron core 8. When θ3 = τs x (0.4 to 0.5), the 6th-order component of electromagnetic force is 0.14 or lower and the 12th-order component of electromagnetic force is 1.2 or lower. As shown in the torque and torque ripple of Fig. 27, the torque maintains the present value of about 1 and the torque ripple is about 2 or lower. In particular, with θ3 being 0.46 or lower, the torque ripple can be reduced to about 0.85 that is lower than the present level.

In this way, the recesses 18 can decrease the 6th-order component of electromagnetic force to 0.14 or lower and the 12th-order component of electromagnetic force to 1 or lower, maintain the maximum torque, and lower torque ripple below the present level. With this, the embodiment can reduce the electromagnetic force that causes vibration and provide a rotating electrical machine of low vibration and low noise.

It is known that a similar preferable result is obtained if θ3 ≤ τs x 0.5. More precisely, with the number of slots of the stator 1 per phase per pole being 2 and the number of poles being p, it is known that a more preferable result is obtained with the condition of θ3 = (12° to 14°) / (p / 2). An end 10a of each cavity 10 is arranged to satisfy θ2pm = τs x (n + 0.5). When seen from iron core teeth 3 of the stator 1, symmetrically arranged two ends 10a are shifted by 0.5 slot pitches, to relax the influence of electromagnetic change and torque pulsation caused by the slots 4.

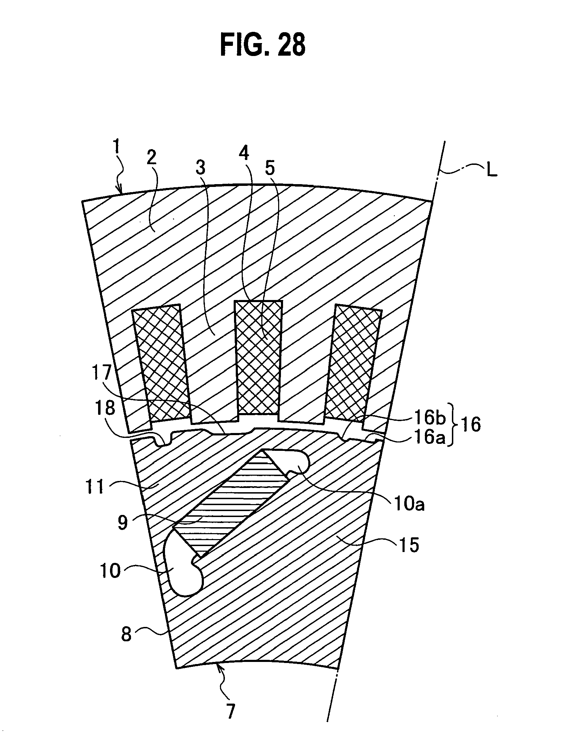

(Tenth embodiment) Figure 28 is a sectional view showing a 1/2-pole area of the tenth embodiment of the present invention. This embodiment forms a recess 16 on an iron core section 15 serving as a reluctance torque magnetic pole. The depth of a part 16a of the recess 16 on the circumferentially central side of the iron core section 15 is shallower than the other part 16b of the recess 16. The depth of the part 16a on the circumferentially central side is 0.25 mm and the depth of the part 16b is 0.5 mm. With this, magnetic resistance around the circumferentially central part of the iron core section 15 is small and that at a part distanced from the circumferentially central part of the iron core section 15 is large, to prevent a reduction in reluctance torque due to the recess 16.

A recess 18 formed at a circumferentially central part of an iron core section 11 that is a magnetic pole produced by permanent magnets 9 is shifted by 90° in electrical angle from the iron core section 15 that is a reluctance torque magnetic pole. Accordingly, the influence of the recess 18 on a reluctance decrease is small. The recess 18 is effective to reduce torque ripple. Accordingly, the depth of the recess 18 can be deepened farther than the depths of the other recesses 16 and 17. According to this embodiment, the depth of the recess 18 is 1 mm, the depth of the recess 17 is 0.5 mm, and the depth of the recess 16 is 0.25 mm at the shallow part 16a and 0.5 mm at the deep part 16b.

With this, the rotating electrical machine according to this embodiment shows no substantial torque decrease and can reduce electromagnetic force that may cause vibration.

The positions of the recesses 16 to 18 are not limited to those described in the above-mentioned embodiments. According to the above-mentioned embodiments, an end of the cavity in which a permanent magnet is inserted is void. Instead, the end may be a nonmagnetic part in which a nonmagnetic material is inserted. According to the above-mentioned embodiments, permanent magnets are arranged in a V shape that opens toward an air gap face. Instead, they may be arranged in a U shape that opens toward the air gap face. It is preferable that each recess is extended along the hole length of the axis of the rotor iron core. Instead, the recess may be formed along a part of the axis. Other than those mentioned above, various modifications may be made to the above-mentioned embodiments without departing from the gist of the present invention.

## Claims

1. A rotating electrical machine comprising an annular stator and a rotor arranged inside the stator and facing the stator with an air gap interposed between the stator and the rotor, the stator having a stator iron core provided with a plurality of slots at circumferential intervals and a coil received in each of the slots, the rotor having a rotor iron core, a plurality of permanent magnets embedded in a plurality of magnetic pole forming positions that are set along an outer circumference of the rotor iron core, and a plurality of recesses formed at circumferential intervals on a face of the rotor iron core that faces the air gap, the recesses extending in an axial direction of the rotor iron core.

2. The rotating electrical machine as set forth in claim 1, wherein a pitch of the recesses differs from a pitch of the slots.

3. The rotating electrical machine as set forth in claim 1, wherein the number of the recesses per magnetic pole is the same, and within the range of one magnetic pole, a pitch of the recesses differs from a pitch of the slots.

4. The rotating electrical machine as set forth in claim 1, wherein the number of the recesses per magnetic pole is the same, the recesses are symmetrically arranged with respect to a central axis that passes through a center of circumferential width of each magnetic pole and the center of the rotor iron core, and on one side of each central axis, a pitch of the recesses arranged in 1/2 of the area of the magnetic pole differs from a pitch of the slots.

5. The rotating electrical machine as set forth in claim 1, wherein the recess is formed at a circumferentially central part on a face of an iron core section that faces the air gap and is magnetized by the permanent magnets to form a magnetic pole on the air gap fronting face at each of the magnetic pole forming positions.

6. The rotating electrical machine as set forth in claim 5, wherein the recess is also formed at a part of the air gap fronting face of the rotor iron core other than the circumferentially central part of the iron core section.

7. The rotating electrical machine as set forth in claim 6, wherein a pitch of the recesses formed at parts on the air gap fronting face of the rotor iron core other than the circumferentially central parts of the iron core sections is different from a pitch of the slots.

8. The rotating electrical machine as set forth in claim 6, wherein the number per magnetic pole of the recesses formed at parts on the air gap fronting face of the rotor iron core other than the circumferentially central part of the iron core section is the same, and within the range of one magnetic pole, a pitch of the recesses differs from a pitch of the slots.

9. The rotating electrical machine as set forth in claim 6, wherein the number per magnetic pole of the recesses formed at parts on the air gap fronting face of the rotor iron core other than the circumferentially central part of the iron core section is the same, the recesses are symmetrically arranged with respect to a central axis that passes through a center of circumferential width of each magnetic pole and the center of the rotor iron core, and on one side of the central axis, a pitch of the recesses arranged in 1/2 of the area of the magnetic pole differs from a pitch of the slots.

10. The rotating electrical machine as set forth in any one of claims 5 to 9, wherein, when τs is the pitch of the slots and n is an integer equal to or larger than 0, the circumferential width of the recess formed at the circumferentially central part of the air gap fronting face of each of the iron core sections is τs x (2n + 0.1 to 1.7).

11. The rotating electrical machine as set forth in any one of claims 1 to 10, wherein, in a state that, at each of the magnetic pole forming positions, the axis passing through the center of circumferential width of the iron core section magnetized by the permanent magnets and forming a magnetic pole on the air gap fronting face and the center of the rotor agrees with an axis passing through a center of circumferential width of an iron core tooth formed between the slots and the center of the rotor, an axis passing through the center of circumferential width of the recess formed at a part of the air gap fronting face of the rotor iron core other than the circumferentially central part of the iron core section and an axis passing through the center of circumferential width of the slot adjacent to the recess in question and the center of the rotor form an angle α2, and the recess in question is arranged so that the angle α2 satisfies "τs x -0.14 to 0.1" (the angle has a negative value when the central axis of the recess in question is on the central axis side of the magnetic pole with respect to the central axis of the slot and has a positive value when it is on the opposite side) where is is the pitch of the slots.

12. The rotating electrical machine as set forth in any one of claims 1 to 10, wherein, in a state that, at each of the magnetic pole forming positions, the axis passing through the center of circumferential width of the iron core section magnetized by the permanent magnets and forming a magnetic pole on the air gap fronting face and the center of the rotor agrees with an axis passing through a center of circumferential width of an iron core tooth formed between the slots and the center of the rotor, an axis passing through the center of circumferential width of the recess formed at a part of the air gap fronting face of the rotor iron core other than the circumferentially central part of the iron core section and an axis passing through the center of circumferential width of the slot adjacent to the recess in question and the center of the rotor form an angle α3, and the recess in question is arranged so that the angle α3 satisfies "τs x -0.12 to 0.33" (the angle has a negative value when the central axis of the recess in question is on the central axis side of the magnetic pole with respect to the central axis of the slot and has a positive value when it is on the opposite side) where τs is the pitch of the slots.

13. The rotating electrical machine as set forth in any one of claims 5 to 10, wherein the recess formed at the circumferentially central part of the air gap fronting face of each of the iron core sections has a shape that has a wider circumferential width on the air gap side and narrows the circumferential width toward the inner circumferential side of the rotor iron core.

14. The rotating electrical machine as set forth in claim 13, wherein, when τs is the pitch of the slots and n is an integer equal to or larger than 0, the recess formed at the circumferentially central part of the air gap fronting face of the iron core section has a circumferential width of "τs x (2n + 0.53 to 1.06)" at an opening fronting the air gap and a circumferential width of "τs x (2n + 0.20 to 0.49)" at a narrowed part on the inner side of the opening.

15. The rotating electrical machine as set forth in claim 13 or 14, wherein a depth of the air gap fronting wide part of the recess formed at the circumferentially central part of the air gap fronting face of the iron core section is 0.3 to 1.0 times a radial length of the air gap.

16. The rotating electrical machine as set forth in any one of claims 5 to 10 and 13 to 15, wherein the depth of a deepest part of the recess formed at the circumferentially central part of the air gap fronting face of the iron core section is 0.7 to 1.0 times a radial length of the air gap.

17. The rotating electrical machine as set forth in any one of claims 1 to 16, wherein a depth of the recess formed at a part of the air gap fronting face of the rotor iron core other than the circumferentially central part of the iron core section is 0.4 to 4 times the radial length of the air gap.

18. The rotating electrical machine as set forth in any one of claims 1 to 17, wherein a circumferential width of the recess formed at a part of the air gap fronting face of the rotor iron core other than the circumferentially central part of the iron core section is 0.2 to 0.6 times the pitch of the slots.

19. The rotating electrical machine as set forth in any one of claims 1 to 18, wherein, at each of the magnetic poles, a pair of the permanent magnets is arranged in a V shape that opens toward the air gap.

20. The rotating electrical machine as set forth in claim 19, wherein each of the permanent magnets is embedded in a cavity formed in the rotor iron core, and in a state that, at each of the magnetic pole forming positions, the axis passing through the center of circumferential width of the iron core section magnetized by the permanent magnets and forming a magnetic pole on the air gap fronting face and the center of the rotor agrees with an axis passing through the center of circumferential width of the iron core tooth formed between the slots and the center of the rotor, an axis passing through the center of circumferential width of each air-gap-side end of a pair of the cavities of the magnetic pole and the center of the rotor and an axis passing through the center of circumferential width of an adjacent slot and the center of the rotor form an angle α4, the cavities being arranged so that the angle α4 satisfies "τs x -0.25" and "τs x 0.25" (a circumferentially minus direction is "+" and the other direction is "-") where τs is the pitch of the slots.

21. A rotating electrical machine comprising an annular stator and a rotor arranged inside the stator and facing the stator with an air gap interposed between the stator and the rotor, the stator having a stator iron core provided with 48 slots at circumferential intervals and a coil received in each of the slots, the rotor having a rotor iron core, a pair of cavities formed at each of eight magnetic pole forming positions along an outer circumference of the rotor iron core in a V shape that opens toward the air gap, a permanent magnet embedded in each of the cavities, an iron core section magnetized by the permanent magnets at each of the magnetic pole forming positions and forming a magnetic pole on an air gap fronting face of the magnetic pole forming position, a first recess formed at a circumferentially central part of the air gap fronting face of each of the iron core sections, and second and third recesses formed at parts of the air gap fronting face of the rotor iron core other than the circumferentially central part of each iron core section, the second recess being arranged so that an axis passing through a center of circumferential width of the first recess and the center of the rotor and an axis passing through a center of circumferential width of the second recess and the center of the rotor form an angle β2 = τp x 0.226 to 0.265 where τp is a pitch of the magnetic poles, the third recess being arranged so that the axis passing through the center of circumferential width of the first recess and the center of the rotor and an axis passing through a center of circumferential width of the third recess and the center of the rotor form an angle β3 = τp x 0.398 to 0.472, the cavities at each of the magnetic pole forming positions being arranged so that an axis passing through a center of circumferential width of the iron core section and the center of the rotor and an axis passing through a center of circumferential width of each air-gap-side end of a pair of the cavities and the center of the rotor form an angle β4 = τp x -0.25 to -0.35 and τp x 0.25 to 0.35 (a circumferentially minus direction is "+" and the other direction is "-").

22. The rotating electrical machine as set forth in claim 1, wherein there is an iron core section between the magnetic poles generated by the permanent magnets, to serve as a reluctance torque magnetic pole for generating reluctance torque and the recess is formed in an air gap fronting face of the reluctance torque magnetic pole.

23. The rotating electrical machine as set forth in claim 22, wherein the recesses of each of the reluctance torque magnetic poles are symmetrically arranged with respect to a symmetry axis that is an axis passing through a center of circumferential width of the reluctance torque magnetic pole and the center of the rotor iron core.

24. The rotating electrical machine as set forth in claim 22 or 23, wherein a circumferential center position of the recess of the reluctance torque magnetic pole is θ1 = τs x (n + 0.16 to 0.37) where τs is a pitch of the slots, θ1 is an angle between the axis passing through the center of circumferential width of the reluctance torque magnetic pole and the center of the rotor iron core and an axis passing through a widthwise center of the recess and the center of the rotor iron core, and n is an integer.

25. The rotating electrical machine as set forth in any one of claims 22 to 24, wherein a circumferential width of the recess is W1 = τs x (n + 0.2 to 0.5) where τs is a pitch of the slots, W1 is an angle between an axis passing through one side edge of the recess and the center of the rotor iron core and an axis passing through the other side edge of the recess and the center of the rotor iron core, and n is 0 or a natural number.

26. The rotating electrical machine as set forth in claim 22, wherein the recess is formed at a part of the air gap fronting face of the magnetic pole produced by the permanent magnets other than the circumferentially central part.

27. The rotating electrical machine as set forth in claim 26, wherein the recesses of the reluctance torque magnetic pole are symmetrically arranged with respect to a symmetry axis that is an axis passing through a center of circumferential width of the reluctance torque magnetic pole and the center of the rotor iron core and the recesses of the magnetic pole produced by the permanent magnets are symmetrically arranged with respect to a symmetry axis that is an axis passing through a center of circumferential width of the magnetic pole and the center of the rotor iron core.

28. The rotating electrical machine as set forth in claim 26 or 27, wherein a circumferential center position of the recess of the reluctance torque magnetic pole is θ1 = τs x (n + 0.2 to 0.6) and a circumferential center position of the recess of the magnetic pole produced by the permanent magnets is θ2 = τs x (n + 0.85 to 1.3) where τs is the pitch of the slots, θ1 is an angle between the axis passing through the center of circumferential width of the reluctance torque magnetic pole and the center of the rotor iron core and the axis passing through the widthwise center of the recess of the reluctance torque magnetic pole and the center of the rotor iron core, θ2 is an angle between the axis passing through the center of circumferential width of the magnetic pole produced by the permanent magnets and the center of the rotor iron core and an axis passing through a widthwise center of the recess of the magnetic pole produced by the permanent magnets and the center of the rotor iron core, and n is an integer.

29. The rotating electrical machine as set forth in any one of claims 26 to 28, wherein a circumferential width of the recess of the reluctance torque magnetic pole is W1 = τs x (n + 0.4 to 0.7) and a circumferential width of the recess of the magnetic pole produced by the permanent magnets is W2 = τs x (n + 0.47 to 0.6) where τs is the pitch of the slots, W1 is an angle between an axis passing through one side edge of the recess of the reluctance torque magnetic pole and the center of the rotor iron core and an axis passing through the other side edge of the recess of the reluctance torque magnetic pole and the center of the rotor iron core, W2 is an angle between an axis passing through one side edge of the recess of the magnetic pole produced by the permanent magnets and the center of the rotor iron core and an axis passing through the other side edge of the recess of the magnetic pole produced by the permanent magnets and the center of the rotor iron core, and n is 0 or a natural number.

30. The rotating electrical machine as set forth in any one of claims 22 to 29, wherein the recess is formed at a circumferentially central part of the air gap fronting face of the magnetic pole produced by the permanent magnets.

31. The rotating electrical machine as set forth in claim 30, wherein the recess at the circumferentially central part of the magnetic pole produced by the permanent magnets is arranged so that an angle θ3 between the axis passing through the center of circumferential width of the magnetic pole produced by the permanent magnets and the center of the rotor iron core and an axis passing through a side edge, which is distal from the former axis, of the recess at the circumferentially central part of the magnetic pole produced by the permanent magnets and the center of the rotor iron core satisfies θ3 ≤ τs x 0.5.

32. The rotating electrical machine as set forth in any one of claims 22 to 31, wherein the recess of the reluctance torque magnetic pole and the recess of the magnetic pole produced by the permanent magnets other than that at the circumferentially central part have a depth that is 0.2 to 2.0 times a radial length of the air gap and the recess at the circumferentially central part of the magnetic pole produced by the permanent magnets has a depth that is 0.2 to 3.0 times the radial length of the air gap.

33. The rotating electrical machine as set forth in any one of claims 22 to 32, wherein, at each of the magnetic pole forming positions, the permanent magnets are arranged in a V shape that opens toward the air gap or in a U shape that has an opening oriented toward the air gap.

34. The rotating electrical machine as set forth in any one of claims 22 to 33, wherein a space or a nonmagnetic part is formed at an end of each of the permanent magnets on the air gap side, a circumferential center position of the space or nonmagnetic part is θpm = τs x (n + 0.25), or an angle between two axes passing through circumferential width centers of two of the spaces or nonmagnetic parts that sandwich the reluctance torque magnetic pole and the center of the rotor iron core is θ2pm = τs x (n + 0.5) where τs is the pitch of the slots, θpm is an angle between the axis passing through the center of circumferential width of the reluctance torque magnetic pole and the center of the rotor iron core and the axis passing through the center of circumferential width of the space or nonmagnetic part and the center of the rotor iron core, and n is an integer.

35. The rotating electrical machine as set forth in any one of claims 26 to 34, wherein the center position of the recess of the reluctance torque magnetic pole is θ1 = (10° to 14°) / (p / 2), the center position of the recess of the magnetic pole produced by the permanent magnets other than that at the circumferentially central part is θ2 = (26° to 39°) / (p / 2), the circumferential width of the recess of the reluctance torque magnetic pole is W1 = (12° to 18°) / (p / 2), and the circumferential width of the recess of the magnetic pole produced by the permanent magnets other than that at the circumferentially central part is W2 = (14° to 18°) / (p / 2) where the number of slots per phase per pole of the stator is 2, p is the number of poles, θ1 is an angle between the axis passing through the center of circumferential width of the reluctance torque magnetic pole and the center of the rotor iron core and the axis passing through the widthwise center of the recess of the reluctance torque magnetic pole and the center of the rotor iron core, θ2 is an angle between the axis passing through the center of circumferential width of the magnetic pole produced by the permanent magnets and the axis passing through the widthwise center of the recess other than that at the circumferentially central part and the center of the rotor iron core, and n is an integer.

36. The rotating electrical machine as set forth in any one of claims 26 to 34, wherein the center position of the recess of the reluctance torque magnetic pole is θ1 = (10° to 14°) / (p / 2), the center position of the recess of the magnetic pole produced by the permanent magnets other than that at the circumferentially central part is θ2 = (26° to 39°) / (p / 2), the circumferential width of the recess of the reluctance torque magnetic pole is W1 = (12° to 18°) / (p / 2), the circumferential width of the recess of the magnetic pole produced by the permanent magnets other than that at the circumferentially central part is W2 = (14° to 18°) / (p / 2), and the position of one side edge of the recess at the circumferentially central part of the magnetic pole produced by the permanent magnets is θ3 = (12° to 14°) / (p / 2) where the number of slots per phase per pole of the stator is 2, p is the number of poles, θ1 is an angle between the axis passing through the center of circumferential width of the reluctance torque magnetic pole and the center of the rotor iron core and the axis passing through the widthwise center of the recess of the reluctance torque magnetic pole and the center of the rotor iron core, θ2 is an angle between the axis passing through the center of circumferential width of the magnetic pole produced by the permanent magnets and the axis passing through the widthwise center of the recess other than that at the circumferentially central part and the center of the rotor iron core, n is an integer, and θ3 is an angle between the axis passing through the center of circumferential width of the magnetic pole produced by the permanent magnets and the center of the rotor iron core and the axis passing through the side edge, which is distal from the former axis, of the recess at the circumferentially central part of the magnetic pole produced by the permanent magnets and the center of the rotor iron core.

37. The rotating electrical machine as set forth in any one of claims 22 to 36, wherein, at each of the magnetic pole forming positions, the permanent magnets are arranged in a V shape that opens toward the air gap and a space or a nonmagnetic part is formed at an end of each of the permanent magnets on the air gap side, the space or nonmagnetic part being arranged at a position where an angle θpm between an axis passing through a center of circumferential width of the space or nonmagnetic part and the center of the rotor iron core and the axis passing through the center of circumferential width of the reluctance torque magnetic pole and the center of the rotor iron core satisfies 32° / (p / 2) ≤ θpm ≤ 40° / (p / 2).

38. The rotating electrical machine as set forth in any one of claims 22 to 37, wherein the recess of the reluctance torque magnetic pole is shallower in a region on the circumferentially central side of the reluctance torque magnetic pole than in the remaining region.

39. The rotating electrical machine as set forth in any one of claims 22 to 38, wherein the recess at the circumferentially central part of the magnetic pole produced by the permanent magnets is deeper than the other recesses.
